# EUROPEAN PATENT APPLICATION

(11) **EP 1 944 190 A1**
(43) Date of publication of application: **16.07.2008**
(21) Application number: 08000144.9
(22) Date of filing: 07.01.2008
(51) Int. Cl.: B60K 35/00

(54) **Instrument panel for motor vehicles, installable in particular on cars, trucks, motorcycles or the like**

(30) Priority: 12.01.2007 IT MO20070006
(71) Applicant: Meta System S.p.A., 42100 Reggio Emilia (IT)
(72) Inventor: Simonazzi, Giuseppe, 42100 Reggio Emilia (IT)
(74) Representative: Feltrinelli, Secondo Andrea

(57) **Abstract**

The instrument panel (1) for vehicles, installable in particular on cars, trucks, motorcycles or the like, comprising a support associable to the dashboard of a vehicle, electronic processing means (2) associated to the support and electronically associable to at least one detection unit (3) detecting the information on the state of the vehicle, visual display means (5) of the information detected associated to the support and at least one communication unit (6) associated to the electronic processing means (2) and suitable for sending the information detected to at least one remote control unit (7) and/or for receiving the information processed by the remote control unit (7).

## Description

The present invention relates to an instrument panel for vehicles, installable in particular on cars, trucks, motorcycles or the like.

It is common knowledge that the development of electronics applied to vehicles in general has led to the increasing use of electronic instruments to control the most diversified functions inside a vehicle.

These functions range, for example, from controlling engine electronics in order to optimise propulsion, to collecting and processing vehicle running parameters such as speed, position or fuel consumption, to detecting malfunctions, from the automatic programming of vehicle maintenance to controlling comfort inside the vehicle and controlling safety by co-ordinating the braking devices or airbags or by using more complex instruments such as devices to control vehicle dynamics.

The above mentioned electronic instruments are normally composed of a plurality of electronic control units suitable for controlling their respective sensor devices and/or actuators on the vehicle.

Generally, such control units are connected to each other by means of a serial bus and they communicate with an instrument panel on the dashboard which is easily accessible to the driver of the vehicle.

It is common knowledge that this instrument panel comprises internal electronics that normally has a unit for collecting and managing information sent from the control units.

The instrument panel also comprises visual display means to visual display the information thus collected that can be made of one or more pilot lights, digital displays or other indicating devices of the analogue type.

The instrument panel of the known type described above is, however, susceptible to improvement especially as regards to allowing the control of a lot more information and allowing the integration of this information for a more complete analysis and indication about the state of the vehicle.

The main aim of the present invention is to provide an instrument panel for vehicles, installable in particular on cars, trucks, motorcycles or the like, that allows the above improvements to be achieved.

Within the scope of such technical aim, another object of the present invention is to achieve the above mentioned improvement with a simple structure, which can be integrated independently from the vehicle type, of relatively practical implementation, with low cost and reduced dimensions.

The objects described above are all achieved by this instrument panel for vehicles, installable in particular on cars, trucks, motorcycles or the like, comprising a support associable to the dashboard of a vehicle, electronic processing means associated to said support and electronically associable to at least one detection unit detecting the information on the state of the vehicle and visual display means of said information detected associated to said support, characterised in that it comprises at least one communication unit associated to said electronic processing means and suitable for sending said information detected to at least one remote control unit and/or for receiving the information processed by said remote control unit.

Further characteristics and advantages of the present invention will appear more evident from the detailed description of a preferred but not exclusive embodiment of an instrument panel for vehicles, installable in particular on cars, trucks, motorcycles or the like, illustrated indicatively by way of non limiting example, in the attached drawings wherein:
figure 1 is a general diagram that illustrates the connection between the instrument panel according to the invention and the units suitable for detecting and processing the information concerning the state of a vehicle;
figure 2 is a general diagram that illustrates the instrument panel according to the invention.

With particular reference to such figures, the reference numeral 1 globally designates an instrument panel installable on motor vehicles, usable in particular on cars, trucks, motorcycles or the like.

The instrument panel 1 comprises a support, which could have a shell or semi-shell in a polymer material which is associable to the dashboard of a vehicle by interposing movable or permanent fixing means of the threaded means type, for example.

The support is not illustrated in the above mentioned figures because it depends, due to the shape, size and fixing method to the vehicle, on the supports currently used for the known instrument panels.

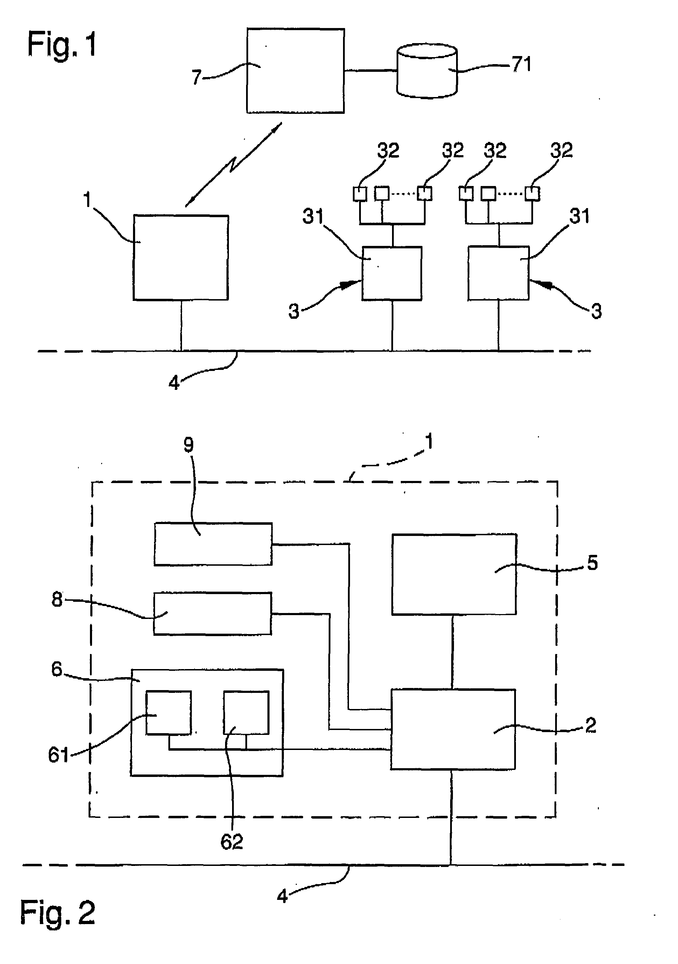

The instrument panel 1 comprises electronic processing means 2, illustrated schematically in figure 2 and normally has one or more integrated circuit devices. The electronic processing means 2 are fixed to the support and electronically associable to one or more detection units 3 for detecting information on the state of the vehicle.

In particular, said detected information can comprise, for example, descriptive parameters concerning the vehicle movement, vehicle wear and corresponding maintenance requirements, indications of any failures, indications concerning driver comfort or safety and so forth.

More specifically, the descriptive parameters of the vehicle movement can comprise, for example, instant speed and/or average running speed, the distance travelled for certain periods of time, acceleration or consumption of fuel.

The descriptive parameters of vehicle wear and maintenance requirements can comprise, for example, the level and pressure of the engine lubricating oil, the extent of wear of the tyres, tyre inflation pressure, the extent of wear of the brakes and so on.

With reference to a car or truck, the indications concerning driver safety can mean, for example, a door open, a safety belt not buckled, uneven braking or a malfunction with one of the air bags while the indications concerning driver comfort can be, for example, the temperature and humidity level inside the vehicle compared to the outside conditions.

Each detection unit 3 connected to the electronic processing means 2 is the conventional type used and comprises an electronic control unit 31 of one or more sensor devices 32 located on the vehicle.

In particular, the extent of tyre wear can be detected by suitable sensor devices 32 suitable for measuring tyre pressure. Such measurements taken by the sensor devices 32 are sent to the electronic control unit 31 that processes them and determines the information that is then sent to the electronic processing means 2 of the instrument panel 1.

The electronic control units 31 are connected together and to the electronic processing means 2 with electronic connecting means 4, composed of a serial bus type channel. The communication and transfer of the information to this serial bus occurs by using a multicast type transmission protocol.

Usefully, the electronic connecting means 4 are the CAN bus (Controller Area

Network) or LIN (Local Interconnect Network) type normally used for transmitting information in the sector of cars and trucks.

Different types of electronic connecting means 4 and the use of different transmission protocols are not, however, excluded.

The instrument panel 1 comprises visual display means 5 of the information detected and received by the electronic processing means 2 which are suitable for the driver to control the state of the vehicle.

The visual display means 5 are the conventional type used and can have one or more digital displays and/or analogue type indicators.

Advantageously, the instrument panel 1 comprises a communication unit 6 connected to the electronic processing means 2 and suitable for interacting with at least one remote control unit 7.

In particular, the communication unit 6 is suitable for sending the information detected concerning the state of the vehicle to the remote control unit 7 and for receiving any indications as well as the data processed by the remote control unit 7 starting from the above information.

Advantageously, the communication unit 6 comprises a transmitter-receiver 61 for sending and receiving information to and from the remote control unit 7. Such transmitter-receiver 61 is preferably of the type that operates in the frequency spectrum with standardised protocols, such as the mobile telephone protocols GSM, GPRS and UMTS or any other conventional communication protocol.

Usefully, the communication unit 6 can have localisation means 62 of the vehicle position, comprising another receiver for receiving a satellite signal.

This receiver can be the conventional type used in satellite navigation systems such as the Global Positioning System (GPS) or Galileo Positioning System.

The presence of the localisation means 62, integrated with the management of an electronic geographical map suitably illustrated by the visual display means 5, allows the instrument panel 1 to be used for navigation, that is, it provides the driver with indications about the roads to reach a selected destination, following a preferential route if wanted.

Alternatively, the position of the vehicle can be determined by the transmitter-receiver 61 communicating with a network of land stations at localised radio frequencies inside an area or along a certain stretch of road. The position thus determined can be processed by the remote control units 7 for defining indications transmitted or re-transmitted subsequently to the instrument panel 1 using the transmitter-receiver 61.

When being used, the instrument panel 1, and in particular the electronic processing means 2, receive information from the detection units 3 about the state of the vehicle and at least a part is subsequently transmitted to the control unit 7 by the transmitter-receiver 61.

Advantageously, the information transmitted can comprise the position of the vehicle detected by the localisation means 62.

The information thus received is processed by the remote control unit 7 and can be registered and organised by storage means 71 of the mass memory type.

Storage of the information can be used, for example, to keep a "history" of movements and about the use of the vehicle or its state of maintenance, not to mention for a dynamic management of traffic.

The information processed by the remote control units 7 is received by the transmitter-receiver 61 of the communication unit 6 and then integrated by the electronic processing means 2 with the information detected by the detection units 3 and visually displayed by the visual display means 5 to have a more complete and accurate indication of the state of the vehicle.

The information processed by the remote control units 7 and received by the instrument panel 1 can comprise, for example, info about the state of vehicle maintenance possibly giving indications and programming preventive maintenance to reduce the danger of potential failures, info about traffic and road conditions, assessing fuel consumption and info about the nearest petrol station, indications of possible driving infractions (driving too fast, driving through a limited traffic zone, etc.), prompt warning about if the vehicle is approaching a likely dangerous situation and so on.

Usefully, the information processed and received by the transmitter-receiver 61 can comprise indications about road signs near the vehicle. Such indications are then repeated by the visual display means 5 of the instrument panel 1.

The remote connection with the remote control units 7 can also be used to update the navigation system's maps or even store and manage data concerning a customised user profile, for one specific driver of the vehicle.

Advantageously, the instrument panel 1 can comprise a measuring device 8, connected to the electronic processing means 2 and suitable for detecting the instant vehicle acceleration and assessing the intensity of accelerations, decelerations or side movements of the vehicle.

The measuring device 8 can be composed of one or more accelerometers and/or gyroscopes and can be associated directly to the communication unit 6 for sending the measurements of instant acceleration of the vehicle to the remote control unit 7.

The information detected by the accelerometer 8 can be used, for example, to analyse the dynamics in the case of an accident or even, together with other sensors, to measure the driving skill which could deteriorate due to drowsiness for instance.

In this latter case the instrument panel 1 can send acoustic and visual signals to the driver.

Advantageously, the instrument panel 1 can comprise a radio wave interface apparatus 9 associated to the electronic processing means 2 which is able to communicate with one or more devices inside the vehicle such as mobile phones, earphones, keypads, etc.

In particular, the interface apparatus 9 can comprise a radio wave transmitter-receiver for local WiFi networks (Wireless Fidelity) or a transmitter-receiver to industrial standards for PAN networks (Personal Area Network) like Bluetooth or the like.

Alternatively, the interface apparatus 9 can comprise an infrared transmitter-receiver that uses IrDA type transmission standard (Infrared Device Application) or the like.

It was in fact seen how the invention described achieves the objects proposed and in particular the fact is underlined that by being able to interact with remote control units it is possible to have a more thorough analysis of the information and an integration of several data for a more accurate indication about the state of the vehicle via the visual display means of the instrument panel.

By integrating several functions in just the one instrument panel the driver of the vehicle also has a physically more concentrated control of the information, unlike what happens when using several devices inside the vehicle.

In particular, the integration of several functions inside just the one instrument panel guarantees a simpler application and a more practical use on motorcycles and, generally, on other types of vehicles that have a dashboard and/or a small inside space.

The invention thus conceived is susceptible to numerous modifications and variations, all of which falling within the scope of the inventive concept.

Furthermore all the details can be replaced with others that are technically equivalent.

In practice, the materials used, as well as the contingent shapes and dimensions, may be any according to requirements without because of this moving outside the protection scope of the following claims.

## Claims

1. Instrument panel for vehicles, installable in particular on cars, trucks, motorcycles or the like, comprising a support associable to the dashboard of a vehicle, electronic processing means associated to said support and electronically associable to at least one detection unit detecting the information on the state of the vehicle and visual display means of said information detected associated to said support, **characterised in that** it comprises at least one communication unit associated to said electronic processing means and suitable for sending said information detected to at least one remote control unit and/or for receiving the information processed by said remote control unit.

2. Instrument panel according to claim 1, **characterised in that** said communication unit comprises at least one receiver and one transmitter operating in the frequency spectrum with mobile telephone protocols.

3. Instrument panel, according to one or more of the preceding claims, **characterised in that** said frequency spectrum and said mobile telephone protocols are selected from the group comprising GSM, GPRS and UMTS.

4. Instrument panel according to one or more of the preceding claims, **characterised in that** said communication unit comprises at least one receiver for receiving a satellite signal.

5. Instrument panel according to one or more of the preceding claims, **characterised in that** said receiver of satellite signal is of the type used in satellite navigation systems such as the Global Positioning System (GPS), Galileo Positioning System or the like.

6. Instrument panel according to one or more of the preceding claims, **characterised in that** it comprises at least one measuring device of the instant acceleration of the vehicle.

7. Instrument panel according to one or more of the preceding claims, **characterised in that** said measuring device is associated to said communication unit for sending the measurements of said instant acceleration to said remote control unit.

8. Instrument panel according to one or more of the preceding claims, **characterised in that** said measuring device comprises at least one accelerometer.

9. Instrument panel according to one or more of the preceding claims, **characterised in that** said measuring device comprises at least one gyroscope.

10. Instrument panel according to one or more of the preceding claims, **characterised in that** it comprises at least one interface apparatus associable to at least one communication device accessible to the driver of said vehicle.

11. Instrument panel according to one or more of the preceding claims, **characterised in that** said interface apparatus comprises at least one radio wave transmitter-receiver.

12. Instrument panel according to one or more of the preceding claims, **characterised in that** said radio wave transmitter-receiver is of the Bluetooth, WiFi type, or the like.

13. Instrument panel according to one or more of the preceding claims, **characterised in that** said interface apparatus comprises at least one infrared transmitter-receiver.

14. Instrument panel according to one or more of the preceding claims, **characterised in that** said infrared transmitter-receiver uses transmission standards of the IrDA type (Infrared Device Application) or the like.

15. Instrument panel according to one or more of the preceding claims, **characterised in that** said electronic processing means are associated to said detection unit by interposing electronic connecting means.

16. Instrument panel according to one or more of the preceding claims, **characterised in that** said electronic connecting means comprise at least one channel for transferring said information.

17. Instrument panel according to one or more of the preceding claims, **characterised in that** said channel comprises a serial bus with multicast type transmission protocol.

18. Instrument panel according to one or more of the preceding claims, **characterised in that** said support is associable to the dashboard of said vehicle by interposing movable or permanent fixing means.

19. Instrument panel according to one or more of the preceding claims, **characterised in that** said detected information comprises descriptive parameters concerning the vehicle movement.

20. Instrument panel according to one or more of the preceding claims, **characterised in that** said detected information comprises parameters indicating the wear state of the vehicle.

21. Instrument panel according to one or more of the preceding claims, **characterised in that** said detected information comprises the indication of any failures on the vehicle.

22. Instrument panel according to one or more of the preceding claims, **characterised in that** said detected information comprises indications concerning safety of the driver,

23. Instrument panel according to one or more of the preceding claims, **characterised in that** said detected information comprises indications concerning comfort of the driver.

24. Instrument panel according to one or more of the preceding claims, **characterised in that** said information processed by said remote control unit comprises indications about road signs near the vehicle.

25. Instrument panel according to one or more of the preceding claims, **characterised in that** said information processed by said remote control unit comprises indications about the position of the vehicle.

26. Instrument panel according to one or more of the preceding claims, **characterised in that** said information processed by said remote control unit comprises indications about programming preventive maintenance on said vehicle.

27. Instrument panel according to one or more of the preceding claims, **characterised in that** said information processed by said remote control unit comprises indications about traffic and road conditions.

28. Instrument panel according to one or more of the preceding claims, **characterised in that** said information processed by said remote control unit comprises indications about the presence of dangerous conditions.
